# EUROPÄISCHE PATENTSCHRIFT

(11) **EP 0 670 774 B1**
(45) Veröffentlichungstag und Bekanntmachung des Hinweises auf die Patenterteilung: **03.03.1999**
(21) Anmeldenummer: 94927659.6
(22) Anmeldetag: 28.09.1994
(51) Int. Cl.: B32B 1/08, B32B 27/08, F16L 11/12

(54) **MEHRSCHICHT-POLYMERROHRLEITUNG**
MULTIPLY POLYMER PIPE
CONDUITE RIGIDE EN POLYMERE A COUCHES MULTIPLES

(30) Priorität: 28.09.1993 DE 4333002; 27.09.1994 DE 4434530
(43) Veröffentlichungstag der Anmeldung: 13.09.1995
(73) Patentinhaber: EMS-INVENTA AG, 8001 Zürich (CH)
(72) Erfinder: STOEPPELMANN, Georg, CH-7402 Bonaduz (CH); PFLEGER, Wolfgang, CH-7015 Tamins (CH)
(74) Vertreter: Becker, Eberhard
(86) Internationale Anmeldenummer: EP9403239
(87) Internationale Veröffentlichungsnummer: WO9509081

(56) Entgegenhaltungen:
- EP-A- 0 523 644
- EP-A- 0 558 373
- FR-A- 2 418 810
- FR-A- 2 689 956
- US-A- 3 908 038
- DATABASE WPI Week 9239, Derwent Publications Ltd., London, GB; AN 92-320278 (39) & JP,A,4 224 939 (TOKAI RUBBER IND LTD) 14. August 1992

## Beschreibung

Die Erfindung betrifft den in den Patentansprüchen angegebenen Gegenstand.

Die Erfindung betrifft insbesondere einer neuartigen Polyamid/Polyvinyliden-Blend sowie eine durch Coextrusion hergestellte Mehrschicht-Polymerrohrleitung mit einer Außenschicht auf Basis von Polyamid und einer Innenschicht aus Polyvinylidenfluorid (PVDF) oder dessen Copolymeren, wobei die Innen- und Außenschicht durch mindestens eine haftvermittelnde Zwischenschicht aus dem neuartigen Polyamid/PVDF-Blend kraftschlüssig miteinander verbunden sind. Der Begriff der Rohrleitung umfaßt im Rahmen der Erfindung auch Schlauchleitungen. Erfindungsgemäße Schlauch- oder Rohrleitungen können glatt oder gewellt ausgestaltet sein und werden für den Transport chemischer Agenzien, wie z. B. Freon in Kühlleitungen, verwendet. Bevorzugtes Anwendungsgebiet ist aber der Kraftfahrzeugsektor, insbesondere als Benzin- oder Kühlflüssigkeitsleitung.

Rohrleitungen aus Polyamid sind bekannt und werden für vielseitige Anwendnungszwecke eingesetzt. Einschichtige Rohre erfüllen nicht die notwendigen Anforderungen, wie Inertheit gegen das in ihnen fließende Medium, Beständigkeit gegen hohe und tiefe Temperaturen sowie mechanische Belastungen. Beim Transport von z.B. aliphatischen oder aromatischen Lösungsmitteln, Kraftstoffe o.ä. zeigen sie erhebliche Nachteile wie mangelhafte Sperrwirkung gegen das zu transportierende Medium, unerwünschte Dimensionsänderungen oder zu geringe mechanische Belastbarkeit.

Es wurde bereits versucht, diese Nachteile durch Mehrschicht-Rohre auszuräumen, wobei aber nur einzelne Nachteile vermieden, nicht aber das gewünschte Gesamteigenschaftsbild erzielt werden konnte. So ist es ein Problem bei Mehrschicht-Rohren die Haftvermittlung zwischen den einzelnen Rohrschichten herzustellen.

In den Patentanmeldungen von ATOCHEM EP 0 558 373, EP 0 198 723 und US 5 111 692 wird beschrieben, daß Carbonylgruppen enthaltende Polymere als Haftvermittler zwischen PVDF und nicht mit PVDF mischbaren Polymeren wirken können. Andererseits ist seit langem bekannt, daß zwischen PVDF und der Carbonylgruppe spezifische Wechselwirkungen bestehen [E. Roerdink, G. Challa, Polymer 21 (1980), 509 und M.M. Coleman et al., J. Polym. Science, Polymer Lett. Ed. 15 (1977), 745]. Es ist daher nicht überraschend, daß Carbonylgruppen-haltige Polymere teilweise kompatibel mit PVDF sind. Diese partielle Mischbarkeit allein reicht allerdings nicht aus, daß beispielsweise Polyamid/PVDF Blends als Haftvermittler zwischen Polyamid und PVDF fungieren können. Auch die Einschränkung auf bestimmte Konzentrationsbereiche ergibt nicht zwangsläufig eine gute Haftung zwischen Haftvermittler einerseits und Innen- und Außenschicht andererseits. Die Verweilzeiten sind bei der Vermischung der einzelnen Schichten im Coextrusionskopf sehr kurz, so daß die Verteilung der Polymerschmelzen und die sich einstellenden Morphologien einen starken Einfluß auf die Haftung der einzelnen Schichten haben.

Daher ist es Aufgabe der Erfindung, einen neuartigen Polyamid/Polyvinylidenfluorid-Blend zur Verfügung zu stellen, der als haftvermittelnde Zwischenschicht für eine Rohrleitung verwendet werden kann, die eine gute Sperrwirkung gegen das zu transportierende Medium, Maßhaltigkeit und gute mechanische Belastbarkeit aufweist, wobei insbesondere die Rohrleitung mechanischen Belastungen widerstehen und keine Trennung der verschiedenen Rohrschichten stattfinden kann.

Diese Aufgabe wird durch das Polyamid/Polyvinylidenfluorid-Blend (PA/PVDF-Blend) mit Kugelmorphologie gelöst, wobei das Blend eine PA-Matrix mit dispergierter PVDF-Phase besitzt und das Polyamid des Polyamid/PVDF-Blends eine 1,5 bis 7 mal grössere Scherviskosität als das PVDF des Blends hat.

Weiterhin wird diese Aufgabe durch die coextrudierte Mehrschicht-Polymerrohrleitung gemäß Anspruch 8 gelöst.

In den Unteransprüchen sind vorteilhafte Ausführungsformen der Erfindung enthalten.

Es wurde gefunden, daß überraschenderweise Polyvinylidenfluorid sowohl eine ausgezeichnete Hochtemperatur- und Hydrolysebeständigkeit als auch Sperreigenschaften gegen chemische Agenzien, insbesondere gegen sowohl reinen Kohlenwasserstoffen als auch Alkohol oder deren Gemischen, aufweist. Um zu gewährleisten, daß die Innen- und Außenschicht kraftschlüssig miteinander verbunden sind, ist eine haftvermittelnde Zwischenschicht notwendig. Eine Zwischenschicht, die PVDF oder dessen Copolymeres oder deren Blend oder Mischung enthält, zeigt die notwendige Haftung zu sowohl der Außenschicht als auch zur Innenschicht. Diese Zwischenschicht kann das PVDF bzw. dessen Copolymere in allen Gewichtsanteilen enthalten, bevorzugt sind Anteile kleiner 70 und solche kleiner 50 sind besonders bevorzugt. Eine Zwischenschicht bestehend aus einem Blend oder einer Mischung aus PVDF bzw. dessen Copolymeres und einem Homo- oder Copolyamid bzw. deren Mischungen oder Blends, ist besonders gut geeignet. Hierbei sollte bevorzugt das Polyamid der Außenschicht mit der Polyamidkomponente der Zwischenschicht identisch sein. Eine besonders gute Haftung stellt sich ein, wenn das PA/PVDF-Blend eine Kugelmorphologie besitzt, in der das PVDF in einer PA-Matrix fein verteilt ist, d.h. eine PA-Matrix mit dispergierter PVDF-Phase. Diese Morphologie stellt sich nur bei bestimmten Viskositätsverhältnissen zwischen PA und PVDF ein. Insbesondere muß die Scherviskosität des Polyamidbestandteils, z.B. PA12, um bevorzugt den Faktor 1,5 bis 7, ganz bevorzugt 2 bis 4, größer als die Scherviskosität des PVDF sein.

Neben den richtigen Viskositätsverhältnissen spielt die Extrusionstemperatur bei der Herstellung des PA/PVDF-, bevorzugt PA12/PVDF-Haftvermittler-Blends eine wichtige Rolle. Werden dabei Massetemperaturen von 270 °C überschritten, wird keine wirksame Haftvermittlung beobachtet. Bevorzugte Temperaturen sind 220 °C bis 270°C, besonders bevorzugt 250 °C bis 270 °C. Insbesondere bevorzugt enthält die Zwischenschicht ca. 70 Gew.-% PA11 oder 12 und ca. 30 Gew.-% PVDF.

Als Polyamide werden vorteilhafte Polykondensate aus aliphatischen Lactamen oder ω-Aminocarbonsäuren mit 4 bis 44 Kohlenstoffatomen, bevorzugt 4 bis 18 Kohlenstoffatomen, oder solche aus aromatischen ω-Aminocarbonsäuren mit 6 bis 20 Kohlenstoffatomen eingesetzt.

Ebenfalls geeignet sind Polykondensate aus mindestens einem Diamin und mindestens einer Dicarbonsäure mit jeweils 2 bis 44 Kohlenstoff-Atomen. Beispiele für solche Diamine sind Ethyldiamin, 1,4-Diaminobutan, 1,6-Diaminohexan, 1,10-Diaminodecan, 1,12-Diaminododecan, m- und p-Xylylendiamin, Cyclohexyldimethylenamin, Bis-(p-aminocyclohexyl)methan und seine Alkylderivate.

Beispiele für Dicarbonsäuren sind Bernstein-, Glutar-, Adipin-, Pimelin-, Kork-, Azelain- und Sebacinsäure, Dodecandicarbonsäure, 1,6-Cyclohexandicarbonsäure, Terephthalsäure, Isophthalsäure und Naphthalindicarbonsäure

Besonders geeignet sind Polyamide oder Copolyamide auf Basis der Monomeren von PA6, PA6,6, PA12, PA6,12, PA11, PA12,12, PA10,12, PA6,9, PA6T, PA6,I, PA12,T, PA12,I und PA12/6T und deren Gemische.

Die genannten Polyamide können die üblichen Zusatzstoffe enthalten, wie z.B. UV- und Hitzestabilisatoren, Schlagzähmodifikatoren, Kristallisationsbeschleuniger,Weichmacher, Flammschutzmittel, Gleitmittel, Antistatikmittel, Füllstoffe, Verstärkungsfasern sowie Additive, welche die elektrische Leitfähigkeit erhöhen. Auch das PVDF kann gegebenenfalls entsprechend notwendige Zusatzstoffe enthalten.

Es ist möglich für besondere Anwendungen, wie z.B. für flexible Kühlflüssigkeitsleitungen, die erfindungsgemäßen Rohrleitungen mit einer ring- oder spiralförmigen Wellung zu versehen.

Vorteilhafterweise besitzen die einzelnen Polymerschichten der erfindungsgemäßen Rohrleitung folgende Schichtdicken:

### Innenschicht:

0,05 mm bis 0,5 mm, bevorzugt 0,1 mm bis 0,4 mm, besonders bevorzugt 0,2 mm bis 0,3 mm.

### Außenschicht:

0,1 mm bis 2,0 mm, bevorzugt 0,3 mm bis 1,0 mm, besonders bevorzugt 0,5 mm bis 1,0 mm.

### Zwischenschicht:

0,05 mm bis 0,5 mm, bevorzugt 0,1 mm bis 0,3 mm, besonders bevorzugt 0,1 mm bis 0,2 mm.

Eine bevorzugte Ausführungsform der erfindungsgemäßen Mehrschicht-Polymerrohrleitung besitzt eine Außenschicht aus PA12 oder PA11, eine Innenschicht aus PVDF und eine Zwischenschicht aus einer Mischung aus PVDF und PA12 oder PA11 und eignet sich insbesondere als Benzinleitung.

Es ist möglich, auf der PA-Außenschicht noch mindestens eine Schutzschicht aufzubringen, so daß erfindungsgemäße Rohre insgesamt mehr als drei Schichten aufweisen können.

Die Erfindung wird nun nachfolgend mit Bezug auf die Figuren weiter beschrieben, wobei
Figur 1 einen 70/30 Blend von PA12/PVDF zeigt,
Figur 2 einen 50/50 Blend von PA12/PVDF zeigt.

In den nachstehenden Beispielen wurden folgende Markenprodukte eingesetzt:
- Grilamid L25H:: ein hitzestabilisiertes Polyamid 12 der Firma EMS-CHEMIE AG
- Grilamid L25:: ein Polyamid 12 natur der Firma EMS-CHEMIE AG
- Admer QF500:: ein mit Maleinsäureanhydrid gepfropftes Polypropylen der Firma MITSUI
- Solef 1008/0001:: ein PVDF der Firma SOLVAY
- Solef 1010/0001:: ein PVDF der Firma SOLVAY.

### Beispiele 1 bis 3

Auf einer dem Stand der Technik entsprechenden Coextrusionsanlage mit drei Extrudern wurden Dreischichtrohre hergestellt. Ihre einzelnen Schichtabfolgen sind in Tabelle 1 zusammengestellt.

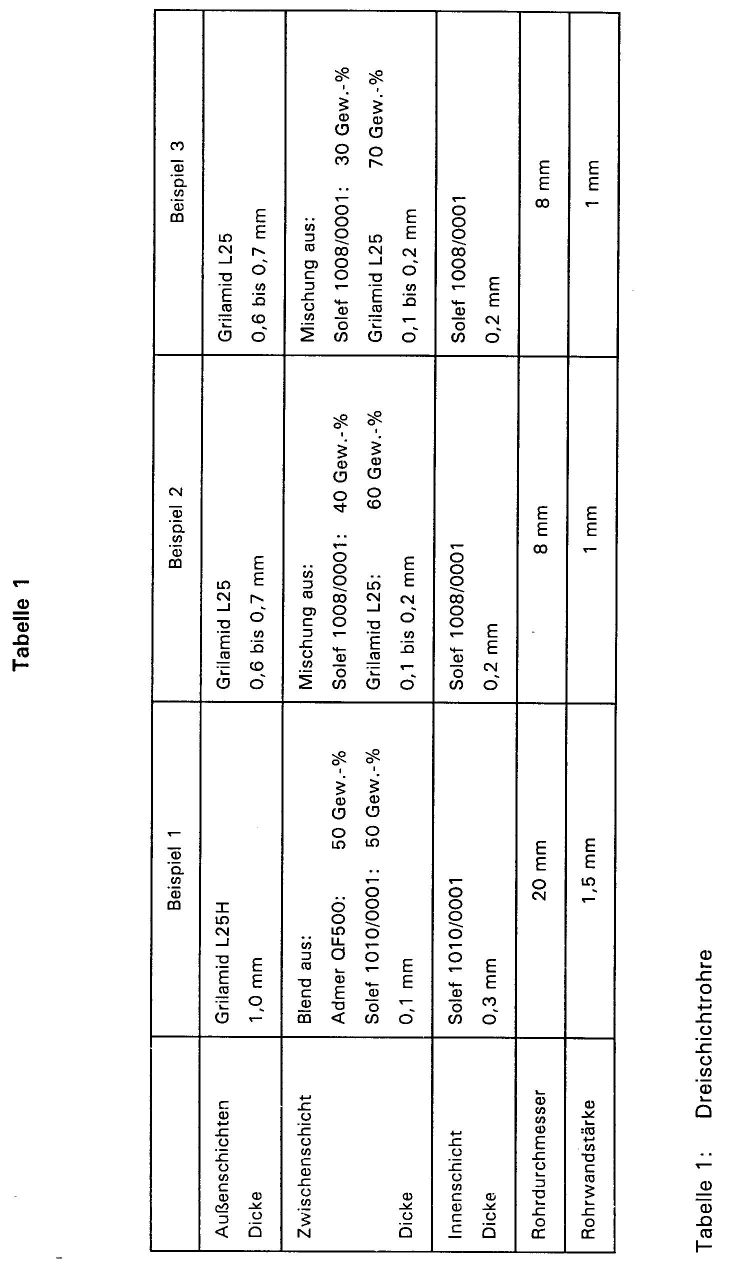

### Beispiel 4

Es wurden nachfolgende PA12/PVDF-Blends hergestellt und auf ihre Haftvermittlereigenschaften getestet.

| | | | |
|---|---|---|---|
| PA 12 [Gew.-%] | 70 | 70 | 50 |
| PVDF [Gew.-%] | 30 | 30 | 50 |
| Scherviskosität PA 12/Scherviskosität PVDF [Pa-s] gemessen bei einer Schergeschwindigkeit von 10 sec⁻¹ und 240 °C | 3000/900 = 3,33 | 3000/3000 = 1 | 3000/900 = 3,33 |
| Haftung PVDF/Haftvermittler/PA 12 | ja | nein | nein |
| Morphologie | Kugel | lamellar | lamellar (kokontinuierlich) |

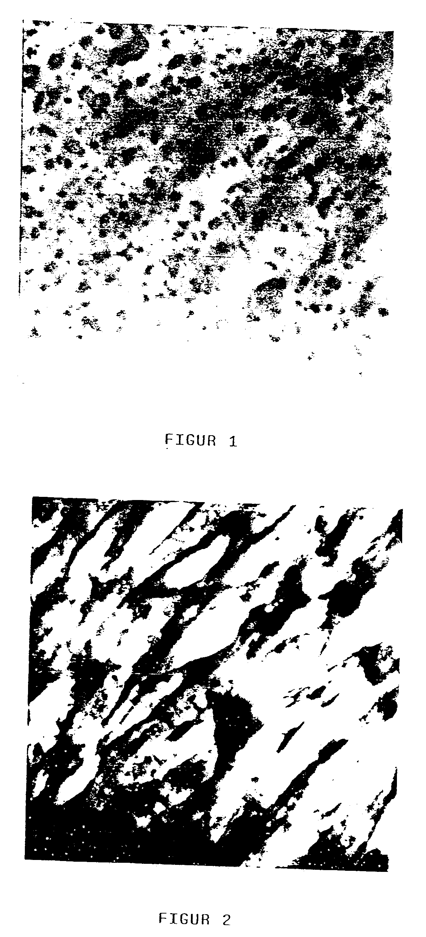

Man sieht, daß in einem Blend mit einem Polyamid : PVDF-Verhältnis von 70:30, wobei das PA eine 3,33-fach größere Scherviskosität als das PVDF hat, eine Haftvermittlung stattfindet und das PA/PVDF-Blend eine Kugelmorphologie besitzt (Fig. 1).

Ein Blend von PA12 und PVDF in einem 50:50-Verhältnis zeigt weder eine Kugelmorphologie noch kommt dadurch eine Haftvermittlung zustande (Fig. 2).

## Patentansprüche

1. Polyamid/Polyvinylidenfluorid-Blend (PA/PVDF-Blend) mit Kugelmorphologie, welcher eine PA-Matrix mit dispergierter PVDF-Phase besitzt, wobei das Polyamid des Polyamid/PVDF-Blends eine 1,5-7 mal größere Scherviskosität als das PVDF des Blends hat.

2. Polyamid/PVDF-Blend nach Anspruch 1, wobei die Extrusionstemperatur bei der Herstellung des Polyamid/PVDF-Blends im Bereich von 220-270°C liegt.

3. Polyamid/PVDF-Blend nach Anspruch 1 oder 2, wobei das Gewichtsverhältnis von Polyamid : PVDF 70:30 ist.

4. Polyamid/PVDF-Blend nach einem der Ansprüche 1-3, wobei das Polyamid ein Homo- oder Copolyamid aus ω-Aminocarbonsäuren oder aliphatischen Lactamen mit 4 bis 44 Kohlenstoffatomen, bevorzugt 4 bis 18 Kohlenstoffatomen, oder aus aromatischen ω-Aminocarbonsäuren mit 6 bis 20 Kohlenstoffatomen ist.

5. Polyamid/PVDF-Blend nach einem der Ansprüche 1-3, wobei das Polyamid ein Homo- und/oder Copolyamid aus Diaminen und Dicarbonsäuren mit jeweils 2 bis 44 Kohlenstoffatomen ist.

6. Polyamid/PVDF-Blend nach Anspruch 5, wobei das Diamin ausgewählt ist aus der Gruppe, die von Ethylendiamin, 1,4-Diaminobutan, 1,6-Diaminohexan, 1,10-Diaminodecan, 1,12-Diaminododecan, m- und p-Xylylendiamin, Cyclohexyldimethylenamin, Bis-(p-aminocyclohexyl)-methan und dessen Alkylderivaten gebildet wird und die Dicarbonsäure ausgewählt ist aus der Gruppe, die von Bernstein-, Glutar-, Adipin-, Pimelin-, Kork-, Azelain- und Sebacinsäure, Dodecandicarbonsäure, 1,6-Cyclohexandicarbonsäure, Terephthalsäure, Isophthalsäure und Naphthalindicarbonsäure gebildet wird.

7. Polyamid/PVDF-Blend nach einem der Ansprüche 1-3, wobei das Polyamid ein Homo- oder Copolyamid auf Basis der Monomeren von PA6, PA6,6, PA12, PA6,12, PA11, PA12,12, PA10,12, PA6,9, PA6,T, PA6,I, PA12,T und/oder PA12/6T ist.

8. Mehrschicht-Polymerrohrleitung mit einer Außenschicht auf Basis von Polyamid und einer Innenschicht aus Polyvinylidenfluorid (PVDF) oder dessen Copolymeren, wobei die Innen- und Außenschicht durch mindestens eine haftvermittelnde Zwischenschicht aus einem Polyamid/PVDF-Blend gemäß einem der Ansprüche 1-7 kraftschlüssig miteinander verbunden sind.

9. Mehrschicht-Polymerrohrleitung nach Anspruch 8, wobei das Polyamid der Außenschicht und das Polyamid im Polyamid/PVDF-Blend der Zwischenschicht identisch sind.

10. Mehrschicht-Polymerrohrleitung nach Anspruch 8 oder 9, wobei das Polyamid der Außenschicht ein Homo- oder Copolyamid oder deren Mischungen oder Blends ist.

11. Mehrschicht-Polymerrohrleitung nach Anspruch 10, wobei das Polyamid ein Homo- oder Copolyamid aus ω-Aminocarbonsäuren oder aliphatischen Lactamen mit 4 bis 44 Kohlenstoffatomen, bevorzugt 4 bis 18 Kohlenstoffatomen, oder aus aromatischen ω-Aminocarbonsäuren mit 6 bis 20 Kohlenstoffatomen ist.

12. Mehrschicht-Polymerrohrleitung nach Anspruch 10, wobei das Polyamid ein Homo- und/oder Copolyamid aus Diaminen und Dicarbonsäuren mit jeweils 2 bis 44 Kohlenstoffatomen ist.

13. Mehrschicht-Polymerrohrleitung nach Anspruch 12, wobei das Diamin ausgewählt ist aus der Gruppe, die von Ethylendiamin, 1,4-Diaminobutan, 1,6-Diaminohexan, 1,10-Diaminodecan, 1,12-Diaminododecan, m- und p-Xylylendiamin, Cyclohexyldimethylenamin, Bis-(p-aminocyclohexyl)-methan und dessen Alkylderivaten gebildet wird und die Dicarbonsäure ausgewählt ist aus der Gruppe, die von Bernstein-, Glutar-, Adipin-, Pimelin-, Kork-, Azelain- und Sebacinsäure, Dodecandicarbonsäure, 1,6-Cyclohexandicarbonsäure, Terephthalsäure, Isophthalsäure und Naphthalindicarbonsäure gebildet wird.

14. Mehrschicht-Polymerrohrleitung nach Anspruch 10, wobei das Polyamid ein Homo- oder Copolyamid auf Basis der Monomeren von PA6, PA6,6, PA12, PA6,12, PA11, PA12,12, PA10,12, PA6,9, PA6,T, PA6,I, PA12,T und/oder PA12/6T ist.

15. Mehrschicht-Polymerrohrleitung nach einem der Ansprüche 8-14, wobei die Schichtdicke der Innenschicht 0,05 mm bis 0,5 mm, bevorzugt 0,1 bis 0,4 mm, besonders bevorzugt 0,2 bis 0,3 mm, beträgt.

16. Mehrschicht-Polymerrohrleitung nach einem der Ansprüche 8-15, wobei die Schichtdicke der Außenschicht 0,1 mm bis 2 mm, bevorzugt 0,3 bis 1 mm, besonders bevorzugt 0,5 bis 1,0 mm, beträgt.

17. Mehrschicht-Polymerrohrleitung nach einem der Ansprüche 8-16, wobei die Schichtdicke der Zwischenschicht 0,05 mm bis 0,5 mm, bevorzugt 0,1 bis 0,3 mm, besonders bevorzugt 0,1 bis 0,2 mm, beträgt.

18. Mehrschicht-Polymerrohrleitung nach einem der Ansprüche 8-17, wobei sie zumindest auf Teilstücken eine ringförmige oder spiralförmige Wellung aufweist.

## Claims

1. Polyamide/polyvinylidene fluoride blend (PA/PVDF blend) having spherical morphology and a PA matrix containing a dispersed PVDF phase, wherein the polyamide of the polyamide/PVDF blend has a shear viscosity which is 1.5-7 times that of the PVDF of the blend.

2. Polyamide/PVDF blend according to Claim 1, wherein the extrusion temperature in the production of the polyamide/PVDF blend is in the range 220-270°C.

3. Polyamide/PVDF blend according to Claim 1 or 2, wherein the weight ratio of polyamide:PVDF is 70:30.

4. Polyamide/PVDF blend according to any of Claims 1-3, wherein the polyamide is a homopolyamide or copolyamide of ω-aminocarboxylic acids or aliphatic lactams having from 4 to 44 carbon atoms, preferably from 4 to 18 carbon atoms, or of aromatic ω-aminocarboxylic acids having from 6 to 20 carbon atoms.

5. Polyamide/PVDF blend according to any of Claims 1-3, wherein the polyamide is a homopolyamide and/or copolyamide of diamines and dicarboxylic acids each having from 2 to 44 carbon atoms.

6. Polyamide/PVDF blend according to Claim 5, wherein the diamine is selected from the group consisting of ethylenediamine, 1,4-diaminobutane, 1,6-diaminohexane, 1,10-diaminodecane, 1,12-diaminododecane, m-and p-xylylenediamine, cyclohexyldimethyleneamine, bis(p-aminocyclohexyl)methane and its alkyl derivatives and the dicarboxylic acid is selected from the group consisting of succinic, glutaric, adipic, pimelic, suberic, azelaic and sebacic acids, dodecanedicarboxylic acid, 1,6-cyclohexanedicarboxylic acid, terephthalic acid, isophthalic acid and naphthalene-dicarboxylic acid.

7. Polyamide/PVDF blend according to any of Claims 1-3, wherein the polyamide is a homopolyamide or copolyamide based on the monomers of PA6, PA6.6, PA12, PA6.12, PA11, PA12.12, PA10.12, PA6.9, PA6.T, PA6.I, PA12.T and/or PA12/6T.

8. Multilayer polymer pipe having an outer layer based on polyamide and an inner layer of polyvinylidene fluoride (PVDF) or its copolymers, wherein the inner and outer layer are bonded to one another by means of at least one intermediate bonding layer of a polyamide/PVDF blend according to any of Claims 1-7.

9. Multilayer polymer pipe according to Claim 8, wherein the polyamide of the outer layer and the polyamide in the polyamide/PVDF blend of the intermediate layer are identical.

10. Multilayer polymer pipe according to Claim 8 or 9, wherein the polyamide of the outer layer is a homopolyamide or copolyamide or a mixture or blend thereof.

11. Multilayer polymer pipe according to Claim 10, wherein the polyamide is a homopolyamide or copolyamide of ω-aminocarboxylic acids or aliphatic lactams having from 4 to 44 carbon atoms, preferably from 4 to 18 carbon atoms, or of aromatic ω-aminocarboxylic acids having from 6 to 20 carbon atoms.

12. Multilayer polymer pipe according to Claim 10, wherein the polyamide is a homopolyamide and/or copolyamide of diamines and dicarboxylic acids each having from 2 to 44 carbon atoms.

13. Multilayer polymer pipe according to Claim 12, wherein the diamine is selected from the group consisting of ethylenediamine, 1,4-diaminobutane, 1,6-diaminohexane, 1,10-diaminodecane, 1,12-diaminododecane, m- and p-xylylenediamine, cyclohexyldimethyleneamine, bis(p-aminocyclohexyl)methane and its alkyl derivatives and the dicarboxylic acid is selected from the group consisting of succinic, glutaric, adipic, pimelic, suberic, azelaic and sebacic acids, dodecanedicarboxylic acid, 1,6-cyclohexanedicarboxylic acid, terephthalic acid, isophthalic acid and naphthalenedicarboxylic acid.

14. Multilayer polymer pipe according to Claim 10, wherein the polyamide is a homopolyamide or copolyamide based on the monomers of PA6, PA6.6, PA12, PA6.12, PA11, PA12.12, PA10.12, PA6.9, PA6.T, PA6.I, PA12.T and/or PA12/6T.

15. Multilayer polymer pipe according to any of Claims 8-14, wherein the thickness of the inner layer is from 0.05 mm to 0.5 mm, preferably from 0.1 to 0.4 mm, particularly preferably from 0.2 to 0.3 mm.

16. Multilayer polymer pipe according to any of Claims 8-15, wherein the thickness of the outer layer is from 0.1 mm to 2 mm, preferably from 0.3 to 1 mm, particularly preferably from 0.5 to 1.0 mm.

17. Multilayer polymer pipe according to any of Claims 8-16, wherein the thickness of the intermediate layer is from 0.05 mm to 0.5 mm, preferably from 0.1 to 0.3 mm, particularly preferably from 0.1 to 0.2 mm.

18. Multilayer polymer pipe according to any of Claims 8-17, wherein at least a part of the pipe has annular or helical corrugation.

## Revendications

1. Blend polyamide/polyvinylidènefluorure (Blend PA/PVDF) à morphologie sphérique, qui possède une matrice de PA contenant une phase de PVDF dispersée, le polyamide du Blend polyamide/PVDF ayant une viscosité au cisaillement 1,5 à 7 fois supérieure à celle du PVDF du Blend.

2. Blend polyamide/PVDF suivant la revendication 1, dans lequel la température d'extrusion au moment de la production du Blend polyamide/PVDF se situe dans la plage de 220 à 270°C.

3. Blend polyamide/PVDF suivant la revendication 1 ou 2, dans lequel le rapport en poids du polyamide au PVDF est égal à 70:30.

4. Blend polyamide/PVDF suivant l'une des revendications 1 à 3, dans lequel le polyamide est un homopolyamide ou un copolyamide dérivé d'acides ω-aminocarboxyliques ou de lactames aliphatiques ayant 4 à 44 atomes de carbone, de préférence 4 à 18 atomes de carbone, ou d'acides ω-aminocarboxyliques aromatiques ayant 6 à 20 atomes de carbone.

5. Blend polyamide/PVDF suivant l'une des revendications 1 à 3, dans lequel le polyamide est un homopolyamide et/ou un copolyamide dérivé de diamines et d'acides dicarboxyliques ayant dans chaque cas 2 à 44 atomes de carbone.

6. Blend polyamide/PVDF suivant la revendication 5, dans lequel la diamine est choisie dans le groupe qui est formé de l'éthylènediamine, du 1,4-diaminobutane, du 1,6-diaminohexane, du 1,10-diaminodécane, du 1,12-diaminododécane, du m- et du p-diaminoxylènes, de la cyclohexyldiméthylène-amine, du bis-(p-aminocyclohexyl)-méthane et de ses dérivés alkyliques et l'acide dicarboxylique est choisi dans le groupe qui est formé des acides succinique, glutarique, adipique, pimélique, subérique, azélaïque et sébacique, des acides dodécanedicarboxylique, 1,6-cyclohexanedicarboxylique, téréphtalique, isophtalique et naphtalène-dicarboxylique.

7. Blend polyamide/PVDF suivant l'une des revendications 1 à 3, dans lequel le polyamide est un homopolyamide ou un copolyamide à base de monomères de PA6, PA6,6, PA12, PA6,12, PA11, PA12,12, PA10,12, PA6,9, PA6,T, PA6,I, PA12,T et/ou PA12/6T.

8. Conduite en polymère à couches multiples ayant une couche externe à base de polyamide et une couche interne à base de polyvinylidènefluorure (PVDF) ou de ses copolymères, les couches interne et externe étant liées l'une à l'autre par adhérence par au moins une couche intermédiaire adhésive formée d'un Blend polyamide/PVDF suivant l'une des revendications 1 à 7.

9. Conduite en polymère à couches multiples suivant la revendication 8, dans laquelle le polyamide de la couche externe et le polyamide du Blend polyamide/PVDF de la couche intermédiaire sont identiques.

10. Conduite en polymère à couches multiples suivant la revendication 8 ou 9, dans laquelle le polyamide de la couche externe consiste en un homopolyamide ou un copolyamide ou en des mélanges ou Blends des deux.

11. Conduite en polymère à couches multiples suivant la revendication 10, dans laquelle le polyamide est un homopolyamide ou un copolyamide dérivé d'acides ω-aminocarboxyliques ou de lactames aliphatiques ayant 4 à 44 atomes de carbone, de préférence 4 à 18 atomes de carbone, ou d'acides ω-aminocarboxyliques aromatiques ayant 6 à 20 atomes de carbone.

12. Conduite en polymère à couches multiples suivant la revendication 10, dans laquelle le polyamide est un homopolyamide et/ou un copolyamide dérivés de diamines et d'acides dicarboxyliques ayant dans chaque cas 2 à 44 atomes de carbone.

13. Conduite en polymère à couches multiples suivant la revendication 12, dans laquelle la diamine est choisie dans le groupe qui est formé de l'éthylènediamine, du 1,4-diaminobutane, du 1,6-diaminohexane, du 1,10-diaminodécane, de 1,12-diaminododécane, des m- et p-diaminoxylènes, de la cyclohexyldiméthylène-amine, du bis-(p-aminocyclohexyl)méthane et de ses dérivés alkyliques et l'acide dicarboxylique est choisi dans le groupe qui est formé des acides succinique, glutarique, adipique, pimélique, subérique, azélaïque et sébacique, des acides dodécanedicarboxylique, 1,6-cyclohexanedicarboxylique, téréphtalique, isophtalique et naphtalènedicarboxylique.

14. Conduite en polymère à couches multiples suivant la revendication 10, dans laquelle le polyamide est un homopolyamide ou un copolyamide à base des monomères de PA6, PA6,6, PA12, PA6,12, PA11, PA12,12, PA10,12, PA6,9, PA6,T, PA6,I, PA12,T et/ou PA12/6T.

15. Conduite en polymère à couches multiples suivant l'une des revendications 8 à 14, dans laquelle l'épaisseur de la couche interne est de 0,05 à 0,5 mm, avantageusement de 0,1 à 0,4 mm, notamment de 0,2 à 0,3 mm.

16. Conduite en polymère à couches multiples suivant l'une des revendications 8 à 15, dans laquelle l'épaisseur de la couche externe est de 0,1 à 2 mm, avantageusement de 0,3 à 1 mm, notamment de 0,5 à 1,0 mm.

17. Conduite en polymère à couches multiples suivant l'une des revendications 8 à 16, dans laquelle l'épaisseur de la couche intermédiaire est de 0,05 à 0,5 mm, avantageusement de 0,1 à 0,3 mm, notamment de 0,1 à 0,2 mm.

18. Conduite en polymère à couches multiples suivant l'une des revendications 8 à 17, qui présente au moins sur des segments une ondulation annulaire ou hélicoïdale.
